# EUROPÄISCHE PATENTSCHRIFT

(11) **EP 1 794 342 B1**
(45) Veröffentlichungstag und Bekanntmachung des Hinweises auf die Patenterteilung: **20.02.2008**
(21) Anmeldenummer: 05789464.4
(22) Anmeldetag: 17.09.2005
(51) Int. Cl.: C23C 4/10, C23C 4/12

(54) **HERSTELLUNG EINER GASDICHTEN, KRISTALLINEN MULLIT SCHICHT MIT HILFE EINES THERMISCHEN SPRITZVERFAHRENS**
PRODUCTION OF A GAS-TIGHT, CRYSTALLINE MULLITE LAYER BY USING A THERMAL SPRAYING METHOD
FABRICATION D'UNE COUCHE DE MULLITE CRISTALLINE ÉTANCHE AUX GAZ À L'AIDE D'UN PROCÉDÉ DE PROJECTION THERMIQUE

(30) Priorität: 30.09.2004 DE 102004047453
(43) Veröffentlichungstag der Anmeldung: 13.06.2007
(73) Patentinhaber: Forschungszentrum Jülich GmbH, 52425 Jülich (DE)
(72) Erfinder: SIEGERT, Roberto, Miami, FL 33156 (US); LATZEL, Silke, 54329 Konz (DE); HANSCH, Ralf, 53474 Bad Neuenahr (DE); STÖVER, Detlev, 52382 Niederzier (DE); VASSEN, Robert, 52134 Herzogenrath (DE)
(74) Vertreter: Hoppe, Karin
(86) Internationale Anmeldenummer: PCT/DE2005/001641
(87) Internationale Veröffentlichungsnummer: WO 2006/034674

(56) Entgegenhaltungen:
- US-A- 5 869 146
- US-A- 6 129 954
- US-A1- 2002 134 312

## Beschreibung

Die Erfindung betrifft ein thermisches Spritzverfahren zur Herstellung von dichten, rissfreien Schichten auf einem metallischen und/oder keramischen Substrat, insbesondere einer kristallinen Mullitschicht (3 Al₂O₃•2 SiO₂) auf einem metallischen oder nichtmetallischen Form- oder Bauteil.

### Stand der Technik

Aus der Literatur sind verschiedenen Beschichtungstechniken bekannt, die zur Herstellung dichter Schichten auf einem metallischen und/oder keramischen Substrat geeignet sind. Diese Schichten dienen regelmäßig als Wärmedämmschichten für Substrate, die hohen Betriebstemperaturen ausgesetzt sind, wie beispielsweise Gasturbinenschaufeln. Häufig dienen solche Schichten neben der reinen Wärmedämmung auch noch als eine gegen Umwelteinflüsse, insbesondere Korrosion schützende Schicht. Schichten, die diese Doppelfunktion erfüllen werden regelmäßig als TEBC (thermal environmental barrier coating) bezeichnet.

Als ein Material, welches als TECB geeignet ist, ist beispielsweise Mullit (3 Al₂O₃•2 SiO₂) zu nennen.

Zu den bekannten Verfahren, mit denen TECB -Schichten auf ein Substrat aufgebracht werden können, gehören unter anderem die thermischen Spritztechniken sowie das Sol-Gel-Verfahren, auf die nachfolgende näher eingegangen wird.

### I. Thermische Spritzverfahren

Unter einem thermischen Spritzverfahren sind solche Verfahren zu verstehen, bei denen pulverförmige Spritzzusätze innerhalb oder außerhalb von Spritzgeräten an-, auf- oder abgeschmolzen und auf vorbereitete Substratoberflächen aufgeschleudert werden. Dabei werden die Oberflächen des Substrates nicht aufgeschmolzen. Die Spritzschichten können aus Spritzzusätzen im flüssigen oder plastischen Zustand aufgetragen werden. Spezifische Schichteigenschaften können weiterhin durch zusätzliches thermisches oder mechanisches Nachbehandeln oder durch Versiegeln erreicht werden.

Beim thermischen Spritzverfahren unterscheidet man die niederenergetischen Flammspritz- und Lichtbogenspritzprozessen und die hochenergetischen Plasmaspritzvarianten.

Das Plasmaspritzen wird überall dort eingesetzt, wo Materialien zur Anwendung kommen sollen, deren Schmelzpunkte so hoch liegen, dass die Temperatur des Flammspritzens zum Aufschmelzen der Partikel regelmäßig nicht ausreicht. Durch das Aufbringen der Partikel mit hoher Geschwindigkeit werden insbesondere keramische Schichten mit geringer Porosität herstellbar.

Thermische Spritzverfahren zeichnen sich durch relativ hohe Abscheidungsraten und eine geringe Energieeinbringung in den Grundwerkstoff aus. Anwendung finden sie insbesondere in den Bereichen Hitze-, Verschleiß- und Korrosionsschutz. Die Haftfestigkeit der Beschichtung ist stark von der Werkstoffkombination, der Vorbehandlung und vom speziellen Verfahren abhängig.

Die dabei eingesetzten Pulver weisen regelmäßig Partikelgrößen zwischen 20 und 40 µm auf. Kleinere Partikel führen in der Regel zum Verstopfen der Injektionsdüsen. Die damit herzustellenden Schichten zeigen dementsprechend minimale Schichtdicken von wenigstens 50 bis 100 µm entsprechend 2 bis 5 Partikellagen.

Sofern anstelle von Pulver als Spritzzusatz eine Suspension oder Lösung eingesetzt wird kommt das so genannte SPS (Suspension Plasma Spraying) zum Einsatz. Daneben gibt es auch das SPPS (Solution Precursor Plasma Spraying), bei dem die Lösungsmittelverdampfung, die Pyrolyse und die anschließende Kristallisation während des Fluges oder auf dem Substrat selbst abläuft. Der Vorteil des Suspensions-Plasmaspritzens sind die feineren Partikelgrößen, die eingesetzt werden können. Allerdings wird der zu verwendende Feststoffgehalt von der Stabilisierung der Partikel in der Suspension begrenzt. Bei zu hoher Feststoffkonzentration kommt es innerhalb der Suspension zu einer Agglomeration der Partikel und damit in der Regel zu einem nachteiligen ungleichmäßige Auftrag auf dem Substrat.

Allgemein weist das Plasmaspritzverfahren die Nachteile auftretenden Segmentationsrisse in der abgeschiedenen Schicht und die Abscheidung amorpher Anteile auf. Ferner treten häufig Haftungsschwierigkeiten zwischen dem Substrat und der abgeschiedenen Schicht auf, wenn diese unterschiedlichen thermische Ausdehnungskoeffizienten aufweisen.

Aus US 6,296,909 B1 ist beispielsweise ein Verfahren bekannt, bei dem rissfreie Mullitschichten auf ein keramisches Substrat aufgebracht werden. Dabei werden die eingesetzten Mullitpartikel in dem thermischen Spritzverfahren auf Temperaturen aufgeheizt, die wenigstens oberhalb der peritektischen Temperatur des Mullits liegen und die aufgetragene Mullitschicht anschließend moderat abgekühlt.

Um einen zu hohen Anteil an amorph abgeschiedenem Mullit in einer aufgebrachten Mullitschicht zu vermeiden schlägt Kang N. Lee et al, J. Am. Ceram. Soc., 79[3] 620-626 (1996) vor, das Substrat während des Abscheidungsvorgangs auf Temperaturen oberhalb der Kristallisationstemperatur des Mullits aufzuheizen.

Auch in US 5,391,404 wird ein Verfahren zur Beschichtung eines keramischen Substrats mit Mullit vorgeschlagen, bei dem das Substrat während des Flammenspritzens auf Temperaturen oberhalb von 800 °C aufgeheizt wird. Dadurch soll sichergestellt werden, dass das aufgeschmolzene Mullitmaterial beim Abkühlen auf dem Substrat sofort wieder auskristallisiert.

Alternative Verfahren zum Aufbringen einer Mullitschicht auf ein SiC/SiC-Komposit sind beispielsweise das CVD (Chemical vapor deposition).

### II. Sol-Gel-Verfahren

Das Sol/Gel-Verfahren ist ein Verfahren zum Auftragen dünner Schichten. Bei dem Sol-Gel-Verfahren bildet sich aus einem flüssigen Sol durch Verlust des Lösungsmittels und Ausbildung eines dreidimensionalen Netzwerkes der amorphe Verbund eines Festkörpers (Gel) aus. Für den Aufbau dieser Strukturen werden insbesondere metallorganische Precusoren eingesetzt.

Die Funktionalität kann durch Einbau weiterer organischer Gruppen beträchtlich erweitert werden. Zudem besteht die Möglichkeit, Nanopartikel (< 50 nm) in diese Strukturen einzubetten und ermöglicht damit weitere, neuartige Werkstoffvarianten.

Die Ausgangsverbindungen werden auf das Substrat durch Spritzen, Tauchen oder Schleudern aufgebracht, damit können auch innen liegende Flächen oder Bohrungen beschichtet werden. Die Trocknungstemperaturen liegen zwischen 80° C und 150° C.

Nachteilig bei der Herstellung von Schichten mit Hilfe des Sol-Gel-Verfahrens ist der zusätzliche Sinterschritt, der u. U. zu einer Schädigung des Substrats führen kann, sowie Möglichkeit der Rissbildung durch die Volumenkontraktionen beim Auskristallisieren der aufgebrachten Schicht. Ferner sind in der Regel pro Auftragung nur geringe Schichtdicken realisierbar, da andernfalls beim Austreiben der organischen Verbindungen in der Regel verstärkt Rissbildung auftritt. Das Sol-Gel-Verfahren ist andererseits vorteilhaft geeignet um extrem dünnen Schichten herzustellen. Beispielsweise weist eine aufgebrachte 250 nm dicke Schicht nach dem Trocknen und Sintern regelmäßig eine Schichtdicke von ca. 50 nm auf.

Aus O. Yamamototo et al, Journal of Material Science Letters, 19 (2000) Seiten 1053-1055, ist bekannt, dünne Mullitschichten auf einem SiC-Substrat aufzubringen, wobei die getrocknete Schicht eine Schichtdicke von 1,0 µm aufweist.

Aus der Literatur ist ferner ein Verfahren bekannt, bei dem vollstabilisiertes Zirkonoxid als Spritzgut für das Plasmaspritzen zunächst durch ein Sol-Gel-Verfahren hergestellt wird. Das Sol-Gel-Verfahren bietet den Vorteil, dass dadurch frei fließende Pulver mit einer gleichförmigen sphärischen Geometrie hergestellt werden können. Die durchschnittlichen Partikelgrößen sind zwischen 10 und 100 µm einstellbar (V. Belov, I. Belov l. Harel; J. Am. Ceram. Soc., 80(4) 982-90 (1997) *.*

Bei Verwendung von Mullit haben sich bislang insbesondere Probleme beim Aufbringen der Schicht auf einem Stahlsubstrat ergeben. Mullit (α = 4,5*10⁻⁶/K) und Stahl (α = 17*10⁻⁶/K) weisen sehr unterschiedliche thermische Ausdehnungskoeffizienten auf. Daher kommt es insbesondere beim pulverbasierten Plasmaspritzen häufig zum Abplatzten der Schicht.

### Aufgabe und Lösung

Aufgabe der Erfindung ist es, ein Verfahren zur Verfügung zu stellen, mit dem insbesondere Mullit als rissfreie, gasdichte und kristalline Schicht auf einem metallischen und/oder keramischen Substrat aufgebracht werden kann, insbesondere auf Stahl. Die Schicht sollte auch bei hohen Temperaturen bis zu 1200 °C gut haften

Die Aufgabe wird gelöst durch ein Verfahren gemäß Hauptanspruch. Vorteilhafte Ausgestaltungen finden sich in den darauf rückbezogenen Ansprüchen.

### Gegenstand der Erfindung

Im Rahmen der Erfindung wurde gefunden, dass kristalline und gasdichte Mullitschichten auf einem metallischen und/oder keramischen Substrat insbesondere durch die Verwendung feinster Partikel erzielt werden kann. Durchschnittliche Partikelgrößen von weniger als 10 µm sind jedoch weder kommerziell erhältlich, noch in reinen Plasmaspritzverfahren einsetzbar. Bei der Herstellung solch feiner Partikel über ein Sol-Gel-Verfahren, wie aus der Literatur für YSZ bekannt ist, und dem Einsatz in einem Suspensions-Spritzverfahren wird die aufzubringende Feststoffmenge nachteilig durch die in der Suspension einsetzende Agglomeration der Partikel limitiert.

Die Erfindung überwindet diese Nachteile, in dem sie ein Verfahren zum Aufbringen von Mullit offenbart, bei dem als Spritzgut (Feedstock) in einem Plasmaspritzverfahren weder Pulver noch eine Suspension, sondern direkt ein Sol eingesetzt wird. Bei dem Sol kann vorteilhaft ein Feststoffgehalt von bis zu 25 Gew.-% eingestellt werden. Die Partikelgröße wird je nach Sol-Parameter zwischen 3 und 30 nm, insbesondere zwischen 5 und 15 nm eingestellt.

Je nach Anzahl der Übergänge können beim erfindungsgemäßen Plasmaspritzen Schichtdicken zwischen 1 µm und einigen mm erzeugt werden. Die minimale Schichtdicke wird unter anderem durch die Partikelgröße, aber auch durch die geförderte Solmenge und den Spritzabstand, sowie die Übergangsgeschwindigkeit und die Überlappung der einzelnen Bahnen bestimmt. So könnte durch einmaliges Überfahren eine theoretische Monolayer von Partikeln mit einem Durchmesser von 500 nm erhalten werden. Praktisch wird eine Schicht aber eine Mindestschichtdicke von wenigstens 1 bis 2 µm aufweisen. Nach oben hin sind der Schichtdicke durch das Verfahren praktisch keine Grenzen gesetzt. Es hat sich gezeigt, dass auch durch die Verwendung von Solen mit höherem Feststoffgehalt bis zu 20 Gew.-%, oder auch das mehrmalige Überfahren zu ungestörten kristallinen, rissfreien Schichten bis in den mm-Bereich führt.

### Spezieller Beschreibungsteil

Nachfolgend wird der Gegenstand der Erfindung anhand eines Ausführungsbeispiels näher erläutert, ohne dass der Gegenstand der Erfindung dadurch beschränkt wird.

Ein VA-Stahlsubstrat wird auf einen wassergekühlten Substrathalter aufgespannt. Für die Beschichtung wird ein modifizierter Triplex 1 Brenner der Fa. Sulzer Metco verwandt, der mit einem Injektor ausgestattet ist. Dieser ist mit einem Winkel α = 60 ° entgegen der horizontalen Achse der Plasmaflamme außerhalb des Brenners justiert. Der Durchmesser der Injektoröffnung beträgt 0,2 mm. Die Injektion des Sols erfolgt mit einem Überdruck von 1 bar. Die Distanz zwischen der Brenneröffnung und dem Substrat beträgt 70 mm. Das Aufbringen der Schicht erfolgt unter Normalatmosphäre (atmosphärisches Plasmaspritzen) in mehreren Übergangszyklen. Eine Verbesserung der Schichtoberfläche konnte durch nochmaliges Überfahren der Probe mit der Plasmaflamme, aber ohne Zufuhr von Sol, erreicht werden.

Als Spritzgut wird ein Sol aus einem organischen Silizium-Precursor Tetraethylenorthosilikat TEOS und einem Aluminiumnitrat, sowie Acetylaceton und einer α-ständigen Karbonsäure, z. B. Essigsäure oder Propionsäure verwendet. Dabei wird ein Feststoffgehalt von ca. 5 Gew.-% Mullit bezogen auf die Oxide (3 Al₂O₃/2 SiO₂) eingestellt. Das so hergestellte Sol ist vorteilhaft langzeitstabil und unter Normalbedingungen lagerfähig. In der Sol-Gel-Vorstufe liegen dabei regelmäßig Partikelgrößen von ca. 5 bis 20 nm je nach Alter des Sols vor. Das Sol aus den Mullitprecursoren reagiert innerhalb der Plasmaflammme zu Mullit. Der Auftrag der entstehenden feinen Mullitpartikel führt auch bei niedrigen Spritztemperaturen vorteilhaft zu einer kristallinen und gasdichten Schicht.

Nachfolgende werden einige Spritzparameter für die Aufbringung einer Mullitschicht auf einem Stahlsubstrat wiedergegeben. Sol A weist einen Al₂O₃-Gehalt von 65 Gew.-% und einen SiO₂-Gehalt von 35 Gew.-% auf. Sol B entspricht mit einem Al₂O₃-Gehalt von 72 Gew.-% und einem SiO₂-Gehalt von 28 Gew.-% umgerechnet der normalen Zusammensetzung von Mullit. Je nach Verfahrensparametern erfolgt die Aufbringung der Schicht mit einer mittleren Schichtdicke zwischen 1,3 und 4,2 µm bei 16 bzw. 30 Übergängen.

Das Sol wird mit einem Überdruck von wenigstens 1 bar in die Plasmaflamme eingebracht. Vorteilhaft hat sich ein Winkel von ca. 60 ° herausgestellt.

Das Substrat wird dabei nur durch die Plasmaflamme erhitzt. Generell erfolgt keine weitere Nachbehandlung mehr. Jedoch kann durch nochmaliges Überfahren mit der Plasmaflamme zu einer besseren Schichtoberflächengüte führen.

## Patentansprüche

1. Verfahren zur Herstellung einer dichten, kristallinen Mullitschicht auf einem metallischen und/oder keramischen Substrat mit Hilfe der Plasmaspritztechnik,
**dadurch gekennzeichnet,**
**dass** als Spritzzusatz ein Sol umfassend Mullitprecursoren eingesetzt wird.

2. Verfahren nach vorhergehendem Anspruch 1, bei dem das Plasmaspritzen unter atmosphärischen Bedingungen durchgeführt wird.

3. Verfahren nach einem der vorhergehenden Ansprüche 1 bis 2, bei dem das Sol mit einem fokussierten Strahl in die Plasmaflamme injiziert wird.

4. Verfahren nach einem der vorhergehenden Ansprüche 1 bis 3, bei dem das Sol mit einem Überdruck von wenigstens 1 bar in die Plasmaflamme injiziert wird.

5. Verfahren nach einem der vorhergehenden Ansprüche 1 bis 4, bei dem nach dem Abscheiden der Schicht, durch nochmaliges Überfahren der Schicht mit der Plasmaflamme eine zusätzliche Verdichtung der Schicht bewirkt wird.

6. Verfahren nach einem der vorhergehenden Ansprüche 1 bis 5, bei dem Mullit mit einem Anteil von 2 bis 25 Gew.-% bezogen auf die Oxide (3 Al₂O₃/2 SiO₂) in dem Sol eingesetzt wird.

7. Verfahren nach einem der vorhergehenden Ansprüche 1 bis 6, bei dem die Mullitschicht auf einem Stahlsubstrat aufgebracht wird.

## Claims

1. Method for production of a tight, crystalline mullite layer on a metal and/or ceramic substrate using the plasma spraying technique,
**characterised in that**
a mullite precursor comprising a sol is used as the spraying additive.

2. Method according to the previous claim 1, in which the plasma spraying is carried out under atmospheric conditions.

3. Method according to one of the previous claims 1 to 2, in which the sol is injected into the plasma flame with a focussed jet.

4. Method according to one of the previous claims 1 to 3, in which the sol is injected into the plasma flame under an excess pressure of at least 1 bar.

5. Method according to one of the previous claims 1 to 4, in which additional compression of the layer is produced by running over the layer with the plasma flame once again, after the layer has been deposited.

6. Method according to one of the previous claims 1 to 5, in which mullite is used in the sol in a proportion of 2 to 25% in weight with reference to the oxides (3 Al₂O₃/2 SiO₂).

7. Method according to one of the previous claims 1 to 6, in which the mullite layer is applied to a steel substrate.

## Revendications

1. Procédé de fabrication d'une couche de mullite dense et cristalline sur un substrat métallique et/ou céramique à l'aide de la technique de projection plasma, **caractérisé en ce que**
on utilise comme additif de projection un sol comprenant des précurseurs de mullite.

2. Procédé selon la revendication précédente 1, dans lequel la projection plasma est réalisée dans des conditions atmosphériques.

3. Procédé selon l'une des revendications précédentes 1 à 2, dans lequel le sol est projeté dans la flamme plasma avec un rayon focalisé.

4. Procédé selon l'une des revendications précédentes 1 à 3, dans lequel le sol est projeté dans la flamme plasma avec une surpression d'au moins 1 bar.

5. Procédé selon l'une des revendications précédentes 1 à 4, dans lequel, après le dépôt de la couche, une densification supplémentaire de la couche est provoquée par un nouveau survol de la couche avec la flamme plasma.

6. Procédé selon l'une des revendications précédentes 1 à 5, dans lequel la mullite est mise en oeuvre dans le sol avec une proportion de 2 à 25 % en poids, par rapport aux oxydes (3 Al₂O₃/2 SiO₂).

7. Procédé selon l'une des revendications précédentes 1 à 6, dans lequel la couche de mullite est déposée sur un substrat en acier.
